# EUROPEAN PATENT APPLICATION

(11) **EP 4 520 187 A1**
(43) Date of publication of application: **12.03.2025**
(21) Application number: 23799520.4
(22) Date of filing: 08.05.2023
(51) Int. Cl.: A23K 50/80, A23K 10/16

(54) **AQUACULTURE FEED**

(30) Priority: 06.05.2022 JP 2022076657
(71) Applicant: Symbiobe Inc., Kyoto-shi, Kyoto 615-8245 (JP); Kyoto University, Kyoto-shi, Kyoto 606-8501 (JP)
(72) Inventor: NUMATA, Keiji, Kyoto-shi, Kyoto 606-8501 (JP); KATO, Shota, Kyoto-shi, Kyoto 615-8245 (JP)
(74) Representative: D Young & Co LLP
(86) International application number: PCT/JP2023/017256
(87) International publication number: WO 2023/214591

(57) **Abstract**

The present invention provides an aquaculture feed whose nitrogen content, which is an index of the protein content, is high. The present invention provides an aquaculture feed containing a crushed product of a marine purple photosynthetic bacterium and having a nitrogen content of 8.0% by mass or more.

## Description

### Technical Field

The present invention relates to an aquaculture feed.

### Background Art

Most aquaculture feeds are manufactured from fish meal as a raw material. In recent years, catches of natural fish, which are raw materials of fish meal, have been unstable and the price of fuel necessary for fishing has increased, and hence manufacture of an aquaculture feed without use of fish meal has been attempted. A method for producing a feed by using a photosynthetic bacterium has been developed as a method for producing a feed without relying on fish meal.

For example, Patent Literature 1 discloses an aquaculture feed containing a green sulfur bacterium as an active ingredient. Patent Literature 1 states that such an aquaculture feed is optimum as a feed additive for fish species.

### Citation List

### Patent Literature

Patent Literature 1: Japanese Patent Laid-Open No. 8-70785

### Summary of Invention

### Technical Problem

However, Patent Literature 1 does not regard giving a high protein content to the aquaculture feed as an objective, and it is assumed that no aquaculture feed having a high protein content has been provided yet.

An objective of the present invention to achieve is to provide an aquaculture feed having a high protein content.

### Solution to Problem

To achieve the aforementioned objective, the present inventors have diligently endeavored to find that use of a marine purple photosynthetic bacterium enables production of an aquaculture feed having a high protein content, thus completing the present invention.

Specifically, the present invention is as follows.
[1] An aquaculture feed containing a crushed product of a marine purple photosynthetic bacterium and having a nitrogen content of 8.0% by mass or more.
[2] The aquaculture feed according to [1], wherein the crushed product of a marine purple photosynthetic bacterium has been subjected to drying treatment.

### Advantageous Effect of Invention

The present invention can provide an aquaculture feed having a high protein content.

### Brief Description of Drawings

[Figure 1] Figure 1 shows a feeding schedule for growth test.
[Figure 2] Figure 2 shows the survival rates of Japanese rice fish. Otohime B-2 was given to Minimum Control and Control, and the aquaculture feed PhotoB, which was produced as described above, was given to Example (PhotoB) (n = 17).

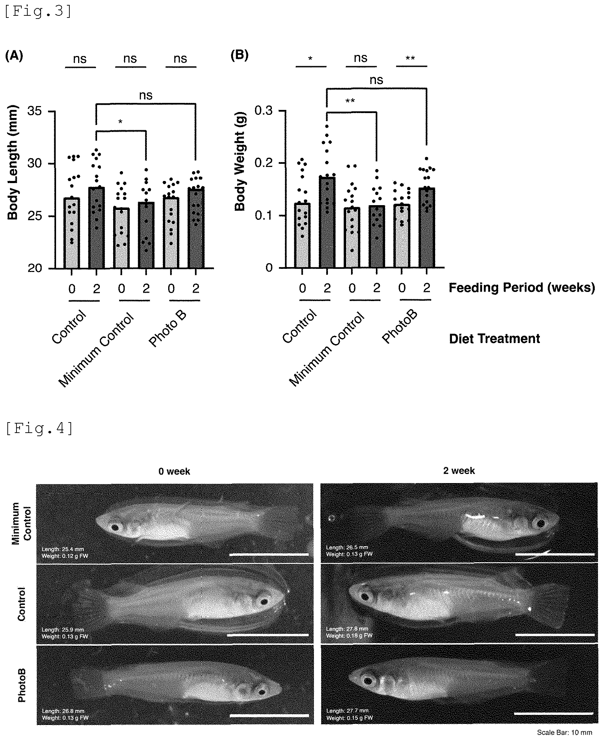

[Figure 3] Figure 3 shows the variations of (A) body length and (B) body weight in Japanese rice fish. Otohime B-2 was given for Minimum Control and Control, and the aquaculture feed PhotoB, which was produced as described above, was given for Example (PhotoB). The numbers of samples at the initiation of feeding for Minimum Control, Control, and Example were each 17, and those 2 weeks after the initiation of feeding were 14, 17, and 17, respectively. Each bar in the graphs indicates the median. Intergroup differences due to different feeding periods were analyzed by Mann-Whitney U test, and differences due to giving different feeds between experimental groups were analyzed by one-way analysis of variance and Dunnett's test. "*" and **"**"** indicate the presence of significant difference at a significance level of 5% and of 1%, respectively. "ns" indicates the absence of significant difference at a significance level of 5%.
[Figure 4] Figure 4 is a series of photographs of the representative appearances of Japanese rice fish at the initiation of feeding and 2 weeks after the initiation of feeding. Otohime B-2 was given for Minimum Control and Control, and the aquaculture feed PhotoB, which was produced as described above, was given to Example (PhotoB).

### Description of Embodiments

### [Aquaculture Feed]

The aquaculture feed of the present embodiment contains a crushed product of a marine purple photosynthetic bacterium and has a nitrogen content of 8.0% by mass or more.

The aquaculture feed of the present embodiment is an aquaculture feed having a high protein content without depending on any natural-fish-derived raw material such as fish meal.

In the present embodiment, having a high protein content is achieved by the nitrogen content of 8.0% by mass or more. For aquaculture feeds, the nitrogen content of an aquaculture feed is an index of the protein content of the feed, and higher nitrogen contents tend to indicate higher protein contents.

In an official analysis method such as that in The Guide of the Analysis Manual for STANDARD TABLES OF FOOD COMPOSITION IN JAPAN, crude protein content is estimated from nitrogen content measured in compositional analysis with use of a nitrogen-protein conversion factor. While nitrogen-protein conversion factors have been determined individually for major foods, in most cases a nitrogen-protein conversion factor of 6.25 is used on the assumption that nitrogen accounts for 16% of protein. That is, in most cases, the amount of crude protein may be estimated by calculating the product of a nitrogen content and a conversion factor of 6.25. While the aquaculture feed of the present embodiment has a nitrogen content of 8.0% by mass or more, the amount of crude protein may be estimated to be 50% by mass or more with use of the nitrogen-protein conversion factor of 6.25.

Thus, it can be said that the fact that the nitrogen content of the aquaculture feed of the present embodiment is 8.0% by mass or more means that the protein content of the aquaculture feed is high, even though the protein content is an estimated value.

The nitrogen content of the aquaculture feed of the present embodiment is 8.0% by mass or more, preferably 9.0% by mass or more, and more preferably 10% by mass or more.

The upper limit value of the nitrogen content is not particularly limited, and may be, for example, 30% by mass, 20% by mass, 15% by mass, or 14% by mass. The nitrogen content may be 8.0% by mass or more and 30% by mass or less, and may be in a range that is within the mentioned range and specified by a lower limit value and an upper limit value arbitrarily selected from those lower and upper limit values.

The nitrogen content of an aquaculture feed is determined as the total amount of nitrogen in the aquaculture feed as measured with a dry combustion method.

The crude protein content of an aquaculture feed may be calculated by dividing the nitrogen content of the aquaculture feed by the standard nitrogen content of protein, or by multiplying the nitrogen content by a nitrogen-protein conversion factor. The standard nitrogen content is, for example, 16%, and the nitrogen-protein conversion factor is 6.25.

The crude protein content of the aquaculture feed of the present embodiment is, for example, 50% by mass or more, more preferably 56% by mass or more, and still more preferably 63% by mass or more. The upper limit value of the crude protein content is not particularly limited, and may be, for example, 88% by mass, 81% by mass, or 75% by mass. The crude protein content may be 50% by mass or more and 88% by mass or less, and may be in a range that is within the mentioned range and specified by a lower limit value and an upper limit value arbitrarily selected from those lower and upper limit values.

### (Marine Purple Photosynthetic Bacterium)

While purple photosynthetic bacteria can be roughly classified by their habitats into freshwater purple photosynthetic bacteria and marine purple photosynthetic bacteria, a marine purple photosynthetic bacterium, which inhabits marine areas, is used in the present embodiment. Marine purple photosynthetic bacteria are bacteria that can use seawater, nitrogen, carbon dioxide, and light for growing, which are abundant on the earth, and are capable of fixing atmospheric nitrogen with nitrogenase through anoxygenic photosynthesis utilizing carbon dioxide under near-infrared light.

Marine purple photosynthetic bacteria include marine purple sulfur bacteria and marine purple non-sulfur bacteria.

Purple sulfur bacteria are bacteria that perform photosynthesis utilizing near-infrared light to grow in a photoautotrophic manner in the presence of hydrogen, sulfides, and carbon dioxide, and purple non-sulfur bacteria are photosynthetic bacteria that grow in a photoheterotrophic manner in the presence of organic matters and others.

Marine purple sulfur bacteria include bacteria belonging to the genus *Allochromatium* (which may be referred to as *Allochromatium* sp., the same applies hereinafter), bacteria belonging to the genus *Ectothiorhodospira,* bacteria belonging to the genus *Halochromatium,* bacteria belonging to the genus *Halorhodospira,* bacteria belonging to the genus *Marichromatium,* bacteria belonging to the genus *Thiocapsa,* bacteria belonging to the genus *Thiohalocapsa,* and bacteria belonging to the genus *Thiophaeococcus,* and marine purple non-sulfur bacteria include bacteria belonging to the genus *Rhodobaca,* bacteria belonging to the genus *Rhodobacter,* bacteria belonging to the genus *Rhodobium,* bacteria belonging to the genus *Afifella* (*Rhodobium*)*,* bacteria belonging to the genus *Rhodothalassium,* bacteria belonging to the genus *Rhodovulum,* and bacteria belonging to the genus *Roseospira.*

Additional examples of the marine purple photosynthetic bacteria include bacteria disclosed in PLOS ONE | DOI:10.1371/journal.pone.0160981; specifically, purple photosynthetic bacteria that inhabit marine environments among purple photosynthetic bacteria that are disclosed in Table 1 in the article and shown below.

The marine purple photosynthetic bacterium may be any of the marine purple photosynthetic bacteria listed as Organism in Table 1 shown below, specifically, any of *Thiohalocapsa marina, Thiophaeococcus mangrovi, Marichromatium bheemlicum, Afifella marina, Rhodovulum euryhalinum, Rhodovulum imhoffii, Rhodovulum sulfidophilum, Rhodovulum tesquicola, Rhodovulum visakhapatnamense, Roseospira marina,* and *Roseospira goensis;* if there is any change in bacterial names because of alternation of the classification, the marine purple photosynthetic bacterium may be one under the new bacterial nomenclature. The marine purple photosynthetic bacterium may be a bacterium that has a genetic name under that nomenclature and corresponds to any of bacteria belonging to the genus *Thiohalocapsa,* bacteria belonging to the genus *Thiophaeococcus,* bacteria belonging to the genus *Marichromatium,* bacteria belonging to the genus *Afifella,* bacteria belonging to the genus *Rhodovulum,* bacteria belonging to the genus *Roseospira,* and bacteria belonging to the genus *Roseospira.*

**[Table 1]**

| **Sulfur type** | **Resource No.** | **Organism** | **Original marine area** |
|---|---|---|---|
| Sulfur | DSM5653 | *Thiohalocapsa marina* | Mediterranean Sea |
| Sulfur | JCM14889 | *Thiophaeococcus mangrovi* | Orissa, India |
| Sulfur | JCM13911 | *Marichromatium bheemlicum* | Bhimunipatnam, India |
| Non-sulfur | DSM2698 | *Afifella marina* | Kagoshima, Japan |
| Non-sulfur | DSM4868 | *Rhodovulum euryhalinum* | Russia |
| Non-sulfur | JCM13589 | *Rhodovulum imhoffli* | Bhimunipatnam, India |
| Non-sulfur | ATCC35886 | *Rhodovulum sulfidophilum* | Groningen, Netherlands |
| Non-sulfur | ATCC BAA1573 | *Rhodovulum tesquicola* | Soda Lake, Russia |
| Non-sulfur | JCM13531 | *Rhodovulum visakhapatnamense* | Visakhapatnam, India |
| Non-sulfur | ATCC BAA447 | *Roseospira marina* | Arcachon Bay, France |
| Non-sulfur | JCM14191 | *Roseospira goensis* | Goa, India |
| Non-sulfur | ATCC BAA1365 | *Roseospira visakhapatnamensis* | Kakinada, India |
| doi:10.1371/journal.pone.0160981.t001 | | | |

Marine purple sulfure bacteria include *Marichromatium bheemlicum, Thiohalocapsa marina*, and *Thiophaeococcus mangrovi,* and marine purple non-sulfur bacteria include *Afifella pfennigii* (*Rhodobium pfennigii), Afifella marina (Rhodobium marinum), Rhodovulum euryhalinum, Rhodovulum imhoffii, Rhodovulum sulfidophilum, Rhodovulum tesquicola, Rhodovulum visakhapatnamense, Roseospira goensis,* and *Roseospira marina.*

The marine purple photosynthetic bacterium to be used in the present embodiment may be a marine purple photosynthetic bacterium that is isolated from seawater in Kyoto among the above bacterial species, for example, a bacterium belonging to the genus *Marichromatium.*

Such a marine purple photosynthetic bacterium may be obtained from a depositary institution through a prescribed procedure. The marine purple photosynthetic bacterium may be a mutant of any of the marine purple photosynthetic bacteria shown above. Mutants include ones obtained with a genetic method such as recombination, transduction, and transformation.

In the present embodiment, use of a marine purple photosynthetic bacterium capable of growing under photoheterotrophic conditions or photoautotrophic conditions is preferred, and *R. sulfidophilum* is preferably used.

### (Production of Aquaculture Feed)

A crushed product of the marine purple photosynthetic bacterium in the present embodiment is produced with the following method as a mode of implementation.

The marine purple photosynthetic bacterium is cultured while being irradiated with artificial light suitable for photosynthesis, and the cells are then harvested. The harvested marine purple photosynthetic bacterium are crushed or crushed and dried, giving the crushed product of the marine purple photosynthetic bacterium in the present embodiment.

The resulting crushed product of the marine purple photosynthetic bacterium may be used as an aquaculture feed.

To obtain the crushed product, one or more treatments of extraction, desalting, granulation, grain size control, and acid/alkali treatment may be performed in addition to culturing, harvesting, crushing, and drying. The marine purple photosynthetic bacterium is preferably contained in the aquaculture feed as a powder formed through crushing treatment and subsequent drying treatment.

Preferably, the aquaculture feed has been subjected to granulation or grain size control depending on a target aquatic organism.

In the present embodiment, each of the treatments from culturing the marine purple photosynthetic bacterium to giving the crushed product may be appropriately performed through a combination of conventionally known methods, and is preferably in a manner described in the following.

In the present embodiment, an aquaculture feed whose nitrogen content, which is an index of the protein content, is high can be produced through a culturing process for the marine purple photosynthetic bacterium. In the present embodiment, an aquaculture feed having a high nitrogen content can be produced through a culturing process for the marine purple photosynthetic bacterium.

Culturing herein refers to a process of culturing a bacterium under specific conditions to increase the number of bacterial cells and allow nutrients such as protein to be accumulated in cells of the bacterium.

Methods known as large-scale culture methods may be employed as a culture method for use in the present embodiment, and examples include continuous culture methods and batch culture methods.

Culture of a starter and culture of the marine purple photosynthetic bacterium to obtain a crushed product of the marine purple photosynthetic bacterium may be appropriately performed without limitation, and culturing the marine purple photosynthetic bacterium under specific conditions for growing it is preferred in the culturing process in the present embodiment.

Culture may be performed under irradiation with near-infrared light which the marine purple photosynthetic bacterium uses to grow in a photoautotrophic manner, and far-red light may be used.

The far-red light may be light the peak wavelength of which lies in a wavelength region of 700 nm to 860 nm.

For irradiating with far-red light, an irradiation method that is used in conventional culture of a marine purple photosynthetic bacterium may be used without limitation.

For culture time, culture may be performed for a period of time enough to allow the marine purple photosynthetic bacterium to accumulate biological substances such as protein, and a culture temperature may be appropriately determined depending on the optimum culture temperature of the marine purple photosynthetic bacterium. The culture temperature may be, for example, 20 to 40°C.

For culture time, for example, the following culture may be performed: culture is performed until the intermediate logarithmic growth phase is reached, medium exchange or the like is then performed, culture is subsequently performed, and culture is performed until the stationary phase is reached.

For the growth or the like of the marine purple photosynthetic bacterium, measurements of optical cell density based on absorbance at 660 nm (OD₆₆₀) may be used as the index.

While culture may be performed under an appropriate atmosphere, culture under conditions with nitrogen allows fixation of atmospheric nitrogen, and a nitrogen-rich aquaculture feed can be provided even without addition of a nitrogen source into the medium. The medium may be bubbled with nitrogen gas to increase the nitrogen concentration in the medium.

The medium for culture may be any medium that allows the marine purple photosynthetic bacterium to be cultured without limitation, and a conventionally known growth medium may be used. Natural seawater may be used as the medium for culture without limitation, and the medium may be a seawater-based medium with use of natural seawater.

The growth medium may contain an organic carbon source, and may contain an inorganic carbon source. If containing an inorganic carbon source, the medium may lack an organic carbon source.

An inorganic carbon source is preferably used in the present embodiment, and in some cases carbon fixation may be promoted through culturing in a medium without any organic carbon source.

The organic carbon source may be, for example, any of glucose, fructose, sucrose, and syrup containing them, carbohydrates including starch and starch hydrolysates and the like, organic acids including acetic acid and propionic acid, and alcohols including ethanol and propanol.

The inorganic carbon source may be, for example, carbon dioxide, carbonate ions, bicarbonate ions, or carbon monoxide. Carbonate ions or bicarbonate ions may be added as a metal salt into the medium. Carbon dioxide or carbon monoxide may be added by means of bubbling together with or separately from nitrogen gas.

If the culture atmosphere contains nitrogen, the growth medium does not need to contain a nitrogen source. The growth medium may contain a nitrogen source. Applicable as the nitrogen source are, for example, ammonia, ammonium salts of an inorganic acid or an organic acid such as ammonium chloride, ammonium sulfate, ammonium acetate, and ammonium phosphate, other nitrogen-containing compounds, peptone, meat extracts, yeast extracts, corn steep liquors, casein hydrolysates, soybean meal and soybean meal hydrolysates, and fermentative bacterial cells and digested products thereof.

For each of the organic carbon source, inorganic carbon source, and nitrogen source, one substance or two or more substances may be used.

The growth medium may further contain an inorganic salt. Examples of the inorganic salt include monobasic potassium phosphate, dibasic potassium phosphate, magnesium phosphate, magnesium sulfate, sodium chloride, sodium thiosulfate, ferrous sulfate, manganese sulfate, copper sulfate, and calcium carbonate.

An example of preferred media is Marine Broth medium described in Example. An oligotrophic medium may be used. Examples of the oligotrophic medium include M6 medium and a medium obtainable by adding appropriate additives to natural seawater. Examples of additives that may be added to natural seawater include lignin-containing waste liquid (what is called lignin waste liquid) discarded in the papermaking process for Japanese paper, sodium thiosulfate, and the nitrogen sources shown above.

The composition of M6 medium is, for example, sodium malate: 5 g; KH₂PO₄: 0.75 g; K₂HPO₄: 0.78 g; CaCl₂·2H₂O: 0.029 g; MgSO₄·7H₂O: 0.247 g; (NH₄)₂SO₄: 1 g; FeSO₄·7H₂O: 0.011 g; vitamin solution: 10 mL; and trace element solution: 10 µL. Here, the composition of the vitamin solution per 100 mL is nicotinic acid: 0.1 g, thiamine: 0.1 g, biotin: 0.005 g, para-aminobenzoic acid: 0.05 g, vitamin B₁₂: 0.001 g, vitamin B₅: 0.05 g, pyridoxine hydrochloride: 0.05 g, EDTA·3Na: 0.2 g, folic acid: 0.05 g, ZnCl₂·5H₂O: 70 µg, MnCl₂·4H₂O: 100 µg, H₃BO₃: 60 µg, CoCl₂·6H₂O: 200 µg, CuCl₂·2H₂O: 20 µg, NiCl₂·6H₂O: 20 µg, and Na₂MoO₄·H₂O: 40 µg. The composition of the trace elements per 1 L is MnSO₄·4H₂O: 11.16 g, ZnSO₄·7H₂O: 2.88 g, Co(NO₃)₂·6H₂O: 2.92 g, CuSO₄·5H₂O: 2.52 g, Na₂MoO₄·2H₂O: 2.42 g, H₃BO₃: 3.10 g, and EDTA·3Na: 41.20 g.

The marine purple photosynthetic bacterium is cultured while being irradiated with artificial light suitable for photosynthesis, and the cells are then preferably collected and washed, and then harvested. In harvesting, washing may be followed by collection; rather, collection may be followed by washing. In harvesting, cells may be harvested from one or more culture tanks. Collection and washing may be each performed multiple times.

Collection of cells of the marine purple photosynthetic bacterium may be performed with a conventionally known method for collecting cells of a bacterium from culture solution.

Washing of cells of the marine purple photosynthetic bacterium may be performed once through suspending collected bacterial cells in a desired solution, or performed with desalting by a conventionally known method such as ultrafiltration.

The number of times of collection and/or washing for harvesting cells of the marine purple photosynthetic bacterium is not particularly limited, and may be one or more.

Desalting to remove salts present in the culture solution or washing solution or acid/alkali treatment for the purpose of adjusting the pH of the culture solution or washing solution may be performed with a conventionally known method.

The marine purple photosynthetic bacterium is contained in the aquaculture feed as a crushed product formed through crushing treatment.

Crushing may be performed, for example, with a method using a sonicator, a homogenizer, or a bead mill homogenizer, enzymatic crushing, or a combination of them. The crushing treatment may be performed with a method of homogenization treatment, for example, using a high-pressure homogenizer at a pressure of 800 to 1500 bar in one or more cycles (e.g., in 5 to 10 cycles, preferably in eight cycles).

In manufacturing the aquaculture feed, drying treatment may be performed, and the drying treatment may be performed, for example, with a forced-air drying method to blow warm air or cool air with a blower or the like, a windless drying method to evaporate moisture through heating, spray drying in which a slurry is suspended in an appropriate buffer and the suspension is then sprayed into gas for rapid drying, a freeze-drying method, a vacuum drying method to deaerate a sealed container with a vacuum pump or the like, a natural drying method to leave in the open air (including sun-drying), or a combination of any of them. For example, the drying treatment may be freeze-drying.

After those treatments, the crushed product of the marine purple photosynthetic bacterium may be subjected to grain size control by sieving or the like, or granulated into appropriate size. The crushed product of the marine purple photosynthetic bacterium may be present in particulate form formed through grain size control or granulation treatment.

The floatability and grain size of the crushed product of the marine purple photosynthetic bacterium in particulate form may be appropriately adjusted according to the type and growth status of the aquatic organism that is a target of aquaculture.

In the case that the target is a fish species, for example, it is preferred to adjust the floatability and grain size of the crushed product of the marine purple photosynthetic bacterium in feeding in view of the size of the fish species and the growth stage thereof such as larvae, fry, juvenile fish, and adult fish. In particular, for marine fish such as young yellowtail and seabream, floating type with small grain size is preferred in the juvenile stage, and it is preferred to employ sinking type with larger grain size as the fish grow toward the adult stage. For freshwater fish such as carp and trout, floating type is generally preferred.

In the case that the target is a crustacean species such as shrimp, sinking type is generally preferred, and high shape retention is preferred for allowing the target to pinch the product with its claws.

The grain size of the crushed product of the marine purple photosynthetic bacterium may be, for example, 2.8 mm or less, 2.0 mm or less, or 1.2 mm or less. The lower limit value of the grain size is not particularly limited, and the grain size may be, for example, 0.1 mm or more, 0.3 mm or more, or 0.5 mm or more.

The grain size may be 0.1 mm or more and 2.8 mm or less, and may be in a range that is within the mentioned range and specified by a lower limit value and an upper limit value arbitrarily selected from those lower and upper limit values.

The aquaculture feed of the present embodiment is preferably provided as a solid feed.

The crushed product of the marine purple photosynthetic bacterium may be used alone for the aquaculture feed, or appropriately treated together with other components, as necessary, and used for the aquaculture feed. The aquaculture feed of the present embodiment may be mixed with a conventionally known aquaculture feed for use.

### [Aquaculture Method]

A mode of the present embodiment is a method for cultivating an aquatic organism, i.e., a fish or shellfish species by using the aquaculture feed. Examples of the target fish or shellfish species in this method are as shown below, and the aquaculture feed may be in any of the modes described above.

The present method includes providing a fish or shellfish species with the aquaculture feed. The aquaculture feed of the present embodiment may be provided at appropriate intervals, and may be provided, for example, once to three times per day.

The target to give the aquaculture feed of the present embodiment is not particularly limited, and may be, for example, a fish or shellfish species; examples thereof include various fish, shellfish, and crustacean species. Specific examples include the family Adrianichthyidae (e.g., Japanese rice fish), the family Monacanthidae (e.g., thread-sail filefish), the family Tetraodontidae (e.g., Japanese pufferfish), the family Anguillidae (e.g., eel), the family Sparidae (e.g., red seabream), the family Paralichthyidae (e.g., olive flounder), the family Pleuronectidae (e.g., yellow striped flounder), the family Epinephelidae (e.g., grouper), the family Carangidae (e.g., jack mackerel, yellowtail), the family Scombridae (e.g., mackerel, tuna, skipjack tuna), and shrimp species.

For example, the target to grow may be a fish species, and may be a species of the family Adrianichthyidae (in particular, Japanese rice fish), the family Monacanthidae (in particular, thread-sail filefish), or shrimp, or any species of them.

The target to grow may be any of larvae, fry, juvenile fish, and adult fish. The aquaculture feed of the present embodiment may be provided at appropriate intervals, and may be provided, for example, once to three times per day.

The aquaculture feed of the present embodiment may promote the growth of the target fish or shellfish species. The aquaculture feed of the present embodiment may promote the development, i.e., may shorten the period required for any of larvae, fry, and juvenile fish to mature into the next form, and may increase the body weight and/or body length of adult fish.

### Example

The following specifically describes the present invention with an example and comparative examples. The present invention is by no means limited to the following example.

### (Bacterial Culture)

The marine purple photosynthetic bacterium *R*. *sulfidophilum* was obtained from American Type Culture Collection (ATCC).

For culturing the marine purple photosynthetic bacterium, Marine Broth 2216 medium (manufactured by Sigma-Aldrich Co. LLC) was used. The composition of the Marine Broth medium per 1 L was as follows: NH₄NO₃: 1.6 mg, H₃BO₃: 22.0 mg, CaCl₂: 1.8 g, Na₂HPO₄: 8.0 mg, iron(III) citrate: 0.1 g, MgCl₂: 5.9 g, MgSO₄: 3.24 g, peptone: 5.0 g, KBr: 0.08 g, KCl: 0.55 g, NaHCO₃: 0.16 g, NaCl: 19.45 g, NaF: 2.4 mg, sodium silicate: 4.0 mg, SrCl₂: 34.0 mg, and yeast extract: 1.0 g.

For culture and preparation of a starter culture, an agar culture colony of the bacterium was cultured in 50 mL of Marine Broth 2216 medium in a sterilized screwcap tube (atmospheric conditions).

Until the optical cell density based on optical density at 660 nm (OD₆₆₀) reached 1 to 1.5 (intermediate logarithmic growth phase), culture was maintained under static conditions at 30°C under a far-red light LED (730 nm, 20 Wm⁻², manufactured by CCS Inc.). Subsequently, the culture was transferred into 0.5 to 1 L of Marine Broth medium, and maintained under the same conditions with stirring with a magnetic stirrer at a stirring speed of 200 rpm until the cells reached the intermediate logarithmic growth phase. Thereafter, the culture was transferred into 10 L of Marine Broth medium, and cultured under the same conditions with stirring at a stirring speed of 450 rpm until the cells reached the stationary phase (optical cell density at OD₆₆₀: 1.8 to 2.0).

### (Production of Aquaculture Feed)

With the bacterium cultured as described above, an aquaculture feed was produced (hereinafter, referred to as "PhotoB"). First, cells of the bacterium cultured for 6 days were harvested through centrifugation, and the resulting pellet was suspended in distilled water in an amount of 1.5 mL per 1 gFW. The suspension was subjected eight times to homogenization treatment using the high-pressure homogenizer Panda Plus1000 at 1000 bar, and then to freeze-drying treatment for 36 to 48 hours. Subsequently, the freeze-dried product was thawed at 4°C for 12 to 16 hours, and the resultant was freeze-dried again for 24 hours or more. The resulting freeze-dried product was crushed, and sieved into the following grain sizes: 1.2 mm or less, 1.2 to 2.0 mm, and 2.0 to 2.8 mm.

### (Compositional Analysis)

The aquaculture feed having a grain size of 1.2 mm or less, obtained as described above, was analyzed as shown below. The result of the compositional analysis is shown in Table 2 together with values shown in a composition table for Otohime B-2 (manufactured by Marubeni Nisshin Feed Co., Ltd.), which is a commercially available feed used as Control in growth test described later. The nitrogen content of Otohime B-2 was given by converting the crude protein content shown in the composition table on the assumption that the standard nitrogen content of protein was 16%. The crude protein content of PhotoB was given by converting the nitrogen content on the assumption that the standard nitrogen content of protein was 16%.

The composition contents in Table 2 are all described in mass percentage.
· Total nitrogen: dry combustion method
· Total phosphate: nitric acid decomposition (microwave decomposition) and absorptiometry (ammonium vanadomolybdate method)
· Total potassium: nitric acid decomposition (microwave decomposition) and atomic absorptiometry

**[Table 2]**

| | Total nitrogen (N) | Crude protein | Total phosphate (P₂O₅) | Total potassium (K₂O) |
|---|---|---|---|---|
| Control | 8 (converted value) | 50 | 1.5 | (N/A) |
| PhotoB | 11.2 | 70 (converted value) | 2.3 | 0.6 |

### (Growth Test)

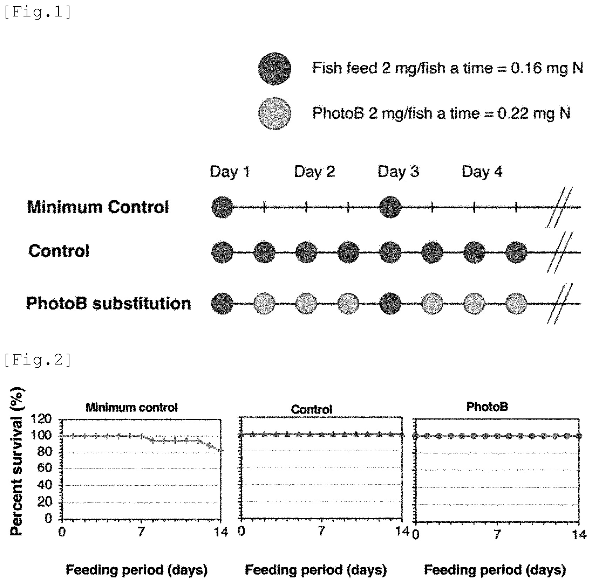

Growth test was carried out according to a feeding schedule shown in Figure 1.

As Minimum Control, Otohime B-2 (manufactured by Marubeni Nisshin Feed Co., Ltd.) in an amount of 2 mg (= 0.16 mgN) was given to each Japanese rice fish individual once per two days. As Control, Otohime B-2 (manufactured by Marubeni Nisshin Feed Co., Ltd.) in an amount of 2 mg (= 0.16 mgN) was given to each Japanese rice fish individual twice per day. As Example (PhotoB), Otohime B-2 (manufactured by Marubeni Nisshin Feed Co., Ltd.) in an amount of 2 mg (= 0.16 mgN) was given to each Japanese rice fish individual once per two days, and the feed produced as described above (sieved into 1.2 mm or less) in an amount of 2 mg (= 0.22 mgN) was given to each Japanese rice fish individual three times per two days.

Figure 2 shows the survival rates of the Japanese rice fish after two-week feeding. While the survival rate decreased over time for Minimum Control, the survival rate was 100% for Control and the feed of Example which contained the marine purple photosynthetic bacterium. In addition, contamination derived from the marine purple photosynthetic bacterium (unexpected growth of bacterial cells) was not found.

Figure 3 shows the variation of body length and body weight in the Japanese rice fish after two-week feeding. It was found that the Japanese rice fish to which the feed of Example which contained the marine purple photosynthetic bacterium was given exhibited promoted growth on average as compared with the case of Minimum Control. Figure 4 shows photographs of representative Japanese rice fish taken at the initiation of feeding and 2 weeks after the initiation of feeding.

Likewise, the aquaculture feed containing the marine purple photosynthetic bacterium which was produced as described above was provided to thread-sail filefish. As with the case of Japanese rice fish, a preferable growing effect was achieved in the thread-sail filefish. The aquaculture feed containing the marine purple photosynthetic bacterium, which was produced as described above, is also applicable to culture of Japanese pufferfish or a shrimp species.

Thus, it was revealed that an aquaculture feed can be preferably produced with a marine purple photosynthetic bacterium.

### Industrial Applicability

Supplying the aquaculture feed of the present invention as a new option of feed raw materials alternative to fish meal is expected to spread and promote the sustainable next-generation aquaculture while preventing the destruction of the marine resources and ecosystem due to overfishing of natural fish and the like, and lead to the stimulation of fishery in local communities and across Japan.

## Claims

1. An aquaculture feed comprising a crushed product of a marine purple photosynthetic bacterium and having a nitrogen content of 8.0% by mass or more.

2. The aquaculture feed according to claim 1, wherein the crushed product of a marine purple photosynthetic bacterium has been subjected to drying treatment.
